# EUROPEAN PATENT SPECIFICATION

(11) **EP 3 655 315 B1**
(45) Date of publication and mention of the grant of the patent: **04.08.2021**
(21) Application number: 18749287.1
(22) Date of filing: 20.06.2018
(51) Int. Cl.: B62M 1/28, B62K 3/00, B62K 5/08, B62K 5/10

(54) **PEDAL SCOOTER**
TRETROLLER
TROTTINETTE À PÉDALE

(30) Priority: 20.07.2017 BG 378817
(43) Date of publication of application: 27.05.2020
(73) Proprietor: Stoyanov, Angel Aleksandrov, 1233 Sofia (BG)
(72) Inventor: STYANOV, Angel Aleksandrov, 1233 Sofia (BG)
(74) Representative: Ilarionov, Pavko Jordanov
(86) International application number: PCT/BG2018/000028
(87) International publication number: WO 2019/014729

(56) References cited:
- CN-U- 203 946 226
- FR-A1- 2 906 217
- US-A1- 2012 248 731

## Description

### Field of the invention

The invention refers to a vehicle called a pedal scooter, which is a hybrid between a bicycle and a scooter, used for urban, sports and leisure travel.

### State of the art

A bicycle scooter as means of travel, sports and entertainment is known from US 2012/0248731 A1. This scooter consists of a horizontal support frame, at the front end of which, on a vertical arm, is mounted a handlebar. The support frame is mounted on the front and rear wheels. A drive pedal is hinged on the support frame.

The scooter has a chain drive system where the rear drive wheel is connected via a drive chain to the drive pedal. The drive chain is mounted on parasitic chain sprockets and chain gears with one-way clutches.

By applying muscle force, the drive pedal is reciprocated around its hinged connection to the support frame. Any weight transfer on the drive pedal from one or the other leg rotates the rear drive wheel through the chain.

In said solution, to reach from the front end of the drive pedal to the rear drive wheel, the chain is situated longitudinally below the scooter support frame, which is somewhat contradictory to the requirement to drive easily and safely, since the scooter should have a low gravity center.

The relatively long chain will slack in time and can be damaged by contact with the unevenness on the road, and the attachment of the chain at both ends of the pedal does not provide for the longest possible use, which leads to reducing of the maximum speed of the pedal scooter.

A pedal scooter according to the preamble of claim 1 is known from CN 203946226 U.

### Summary of the invention

The task of the present invention is to create a comfortable, relatively lightweight and safe pedal scooter for mass use and attractive riding, allowing for higher speeds of movement.

This task is solved by a pedal scooter comprising a support frame mounted on a front and rear bridge and a chain drive system connected to a longitudinally located drive pedal, hinged to the support frame. At the front end of the support frame, a handlebar is mounted on a vertical arm.

According to the invention, the front end of the support frame is hinged on the front bridge through front carriers. The front carriers are mounted laterally and symmetrically on both sides of the support frame at an angle of 25 ° -35 ° to its longitudinal horizontal axis.

At the rear end, the support frame is hinged on the rear bridge through a bearing shaft. The rear bridge consists of a rear axle with rear drive wheels attached to it. The rear axle is mounted by means of a holder to a bearing shaft mounted in a rear bearing box located at the rear of the support frame at an angle of 25-35 ° to its longitudinal axis.

The front bridge of the pedal scooter consists of two bearing boxes hinged to the front carriers and connected to one another by a rake. The front shafts of the two front wheels are housed in the bearing boxes. Each of the front shafts is connected via cardan coupling to a camped to the support frame drive shaft, on which drive shaft are mounted first and second one-way clutches symmetrically to the longitudinal axis of the support frame. The two one-way clutches are connected respectively with first and second drive chain wheels.

The chain drive system of this pedal scooter consists of two drive chains.

The first drive chain, mounted on a first parasitic chain wheel and on a first drive chain wheel, is hinged to a first movable axle mounted to the front of the drive pedal.

The second drive chain located on a second parasitic chain wheel and on a second drive chain wheel, is hinged to a second movable axle, also mounted to the front of the drive pedal.

The two parasitic chain wheels are mounted to a parasitic axle mounted at the upper part of the vertical arm of the support frame parallel to the drive shaft.

The pedal scooter is also fitted with a braking system including a braking device mounted to the rear axle holder, which is connected by means of a braking cable with a brake handle mounted on the handlebar.

The advantage of the present pedal scooter is that it has a relatively safe, compact and easy-to-drive construction that provides comfortable and attractive travel.

### Brief description of the drawings

The present invention is illustrated with the following axonometric drawings where:
**Figure 1** is a side view of the pedal scooter;
**Figure 2** is a front view of the front bridge of the pedal scooter;

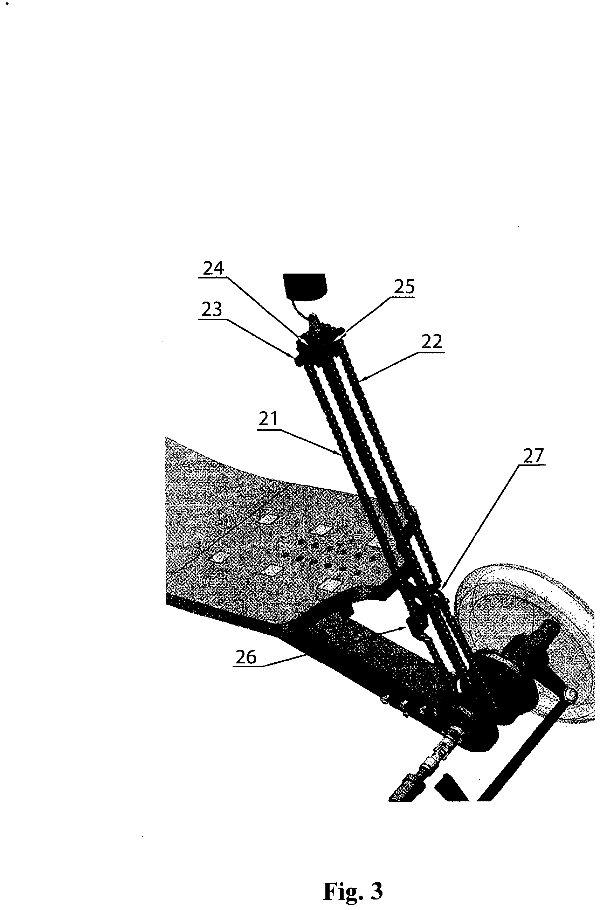

**Figure 3** is a view of the pedal scooter;
**Figure 4** is a view of the front bridge and the drive chains of the pedal scooter.

### Detailed description of an exemplary embodiment

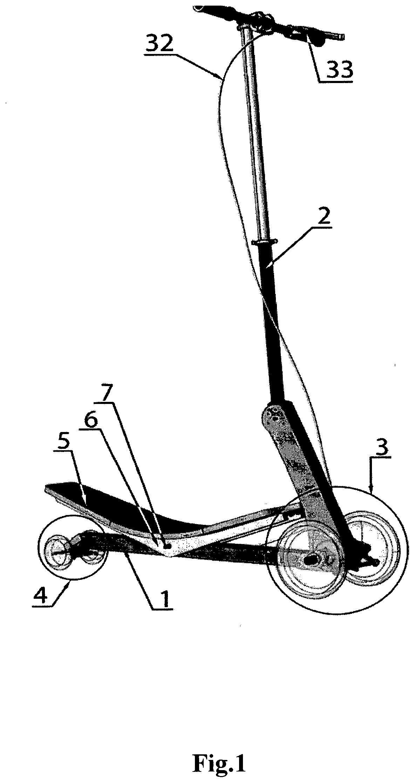

The proposed pedal scooter includes a horizontal support frame 1 with a vertical arm at the front end, where a collapsible handlebar 2 is hinged to the upper end of the vertical arm - Fig. 1.

The support frame 1 is mounted on a front bridge 3 which is simultaneously controllable and driving and on a rear bridge 4 which is both controllable and braking.

A drive pedal 5 is mounted longitudinally to the support frame 1, placed on two parallel plates 6 which are hinged through a central axis 7 on the support frame 1.

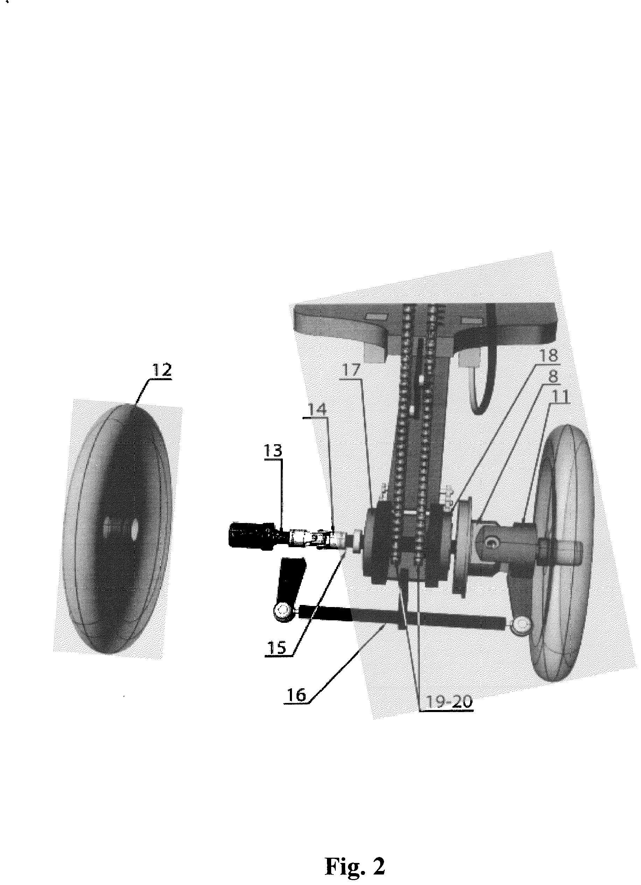

The support frame 1 is hinged on the front bridge 3 via pair of front carriers 8 (Fig. 2), whereas via a bearing shaft mounted in a rear bearing box, the rear part of the support frame 1 is hinged to the rear bridge 4. The front carriers 8 and the rear bearing box are mounted at an angle of about 25 ° to 35 ° to the longitudinal horizontal axis of the support frame 1.

The front bridge 3 is driving and also controllable and consists of two bearing boxes 11 of two front wheels 12, where the bearing boxes 11 are hinged to the front carriers 8 - Fig. 2. The front shafts 13 of the two front wheels 12 are mounted in the bearing boxes 11. Each of the two front shafts 13 is connected by a cardan coupling 14 to a drive shaft 15, camped to the support frame 1. At the same time, the bearing boxes 11 are connected to one another by means of a rack 16. In this way, a lever system is obtained, which allows the bearing boxes 11 and the front wheels 12 to rotate simultaneously.

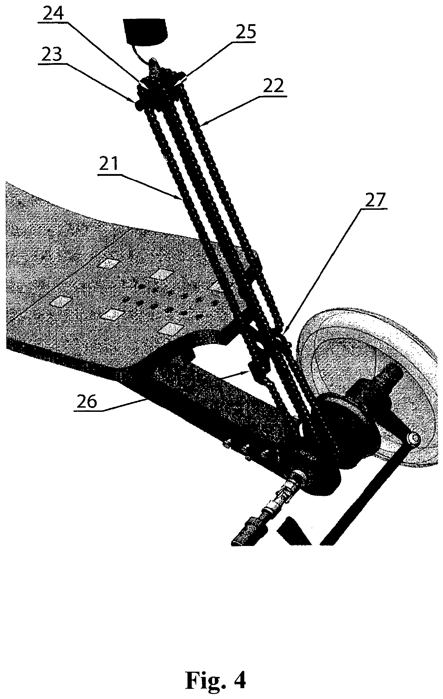

Symmetrically with respect to the longitudinal axis of the support frame 1, on the drive shaft 15 are mounted two one way clutches 17 and 18, which transmit the torque to the drive shaft 15 from a first drive chain wheel 19 and a second drive chain wheel 20 via first a drive chain 21 and a second drive chain 22 respectively - Fig. 2 and Fig. 4.

On a parasitic axle 23, mounted to the upper part of the vertical arm of the support frame 1, parallel to the drive shaft 15, are mounted a first parasitic chain wheel 24 and a second parasitic chain wheel 25.

The first drive chain 21 is placed on the first parasitic chain wheel 24 and on the first drive chain wheel 19 and is hinged to a first movable axle 26.

The second drive chain 22 is mounted on the second parasitic chain wheel 25 and on the second drive chain wheel 20 and is hinged to a second movable axle 27.

The two movable axles 26 and 27 are mounted to the front of the drive pedal 5 longitudinally positioned on the support frame 1.

The rear bridge 4 of the pedal scooter comprises a rear axle, mounted in its middle via a holder perpendicular to the bearing shaft, where at the both ends of the rear axle are mounted two rear wheels. The bearing shaft is mounted through the rear bearing box, located at the rear part of the support frame 1 at an angle of about 30° to its longitudinal axis.

A braking apparatus is mounted to the holder of the rear axle which rotates with the rear axle and the rear wheels mounted thereon around the bearing shaft.

The braking apparatus is actuated by a braking cable 32 by means of a brake handle 33 mounted to the handlebars 2.

The conversion of the movement from the drive pedal 5 into a one-way rotary movement and its transmission to the front bridge 3 is carried out in the following manner. The feet of the rider are placed on the both ends of the driving pedal 5. By successively and repeatedly transferring the weight from one leg to the other, the drive pedal 5 is rotated about the central axle 7, until it rests on the front or rear of the carrier frame 1, in a plane parallel to the direction of movement. When rotating in one direction, the first drive chain 21 is driven by the first movable axle 26 and rotates the first drive chain wheel 19 and the first parasitic chain wheel 24 in one and the same direction. In turn, the first drive chain wheel 19 via the first one-way clutch 17 rotates the drive shaft 15, which, by means of the cardan couplings 14 and the front shafts 13, rotates the front wheels 12 of the pedal scooter and it moves forward.

At the same time, the second drive chain 22 driven by the second movable axle 27 rotates the second drive chain wheel 20 and the second parasitic chain wheel 25 in one and the same direction. In turn, the second drive chain wheel 20 rotates the second one-way clutch 18 in the direction, in which the second one-way clutch 18 does not transmit the torque to the drive shaft 15.

Upon transferring the weight on the other leg and turning the drive pedal 5 in the opposite direction, the first drive chain 21 driven by the first movable shaft 26 rotates the first drive chain wheel 19 and the first parasitic chain wheel 24 in the opposite direction to the previous stroke, whereby the one-way clutch 17 does not transmit the torque to the drive shaft 15.

At the same time, the second drive chain 22 driven by the second movable shaft 27 rotates the second drive chain wheel 20 and the second parasitic chain wheel 25 in the direction in which the second one-way clutch 18 transmits the torque and rotates the drive shaft 15. The drive shaft 15 by means of the cardan couplings 14 and the front shafts 13, rotates the front wheels 12 of the pedal scooter and it moves forward.

Thus, in the periodic rotation of the drive pedal 5 in one of the two directions, one of the two one-way clutches 17 and 18 conveys the torque of the drive shaft 15 and the other one idles. The end result of this is that the drive shaft 15, and from there, via the cardan couplings 14 and the front shafts 13, the front wheels 12 are always driven in the same direction whenever the weight is transferred from one to the other foot and the pedal scooter is moving forward.

In the event of a change in the pitch of the terrain and when it is necessary to change the torque, it is sufficient for the rider to step both feet towards the center of the drive pedal 5 closer to the central axis 7, thereby reducing the torque and the movement of his legs up and down, or proceeds to the ends of the drive pedal 5 further than the central axis 7, thereby increasing the torque and / or the upward and downward movement of the legs respectively. If there is a need to change the torque over a larger range, a set of gears and a device for transferring drive chains 21 and 22 can be mounted on each of them, as in the case of bicycles.

The turning of the pedal scooter takes place in the following way:
The rider has both feet on the front and rear of the drive pedal 5. To turn, the rider carries the weight of his body to the left or right, and / or presses the handlebar 2 to the left or right to the direction of travel. As a result, the support frame 1 hinged on the carriers 8 and the bearing shaft is tilted to the left or to the right.

The bearing boxes 11, in which the front wheels 12 are mounted, are hinged to the carriers 8 at an angle of about 30° with respect to the front horizontal portion of the support frame 1. The two bearing boxes 11 of the front wheels 12 are also hinged to one another via the rack 16. This connection between the two bearing boxes 11 via the rack 16 creates a lever system which, when the carrier frame 1 is tilted to the left or to the right to the direction of travel, causes the front wheels 12 to turn, respectively, to the left or right to the direction of travel.

The rear axle of the pedal scooter, at both ends of which are mounted the two rear wheels, in its centre is mounted by means of the holder perpendicular to the bearing shaft. The bearing shaft is camped via the rear bearing box, located at the rear of the support frame 1, at an angle of about 30° with respect to its longitudinal axis. This coupling results in a lever system which, when the support frame 1 is tilted to the left or to the right in the direction of travel, causes the rear axle together with the rear wheels to rotate around the bearing shaft, respectively in clockwise or counter-clockwise direction, seen from the top of the pedal scooter. Thus, when tilting during the movement of the support frame 1, for example, to the left, the two front wheels 12 are turning to the left with regards to the direction of travel and the two rear wheels, together with the rear axle, rotate about the bearing shaft clockwise, seen from above, and the pedal scooter performs a left turn with a much smaller radius compared to the radius of turning of the known bicycles and the existing scooters due to the fact that both the front wheels 12 and rear wheels turn.

Similarly, when the carrier frame 1 is tilted to the right, the two front wheels 12 turn to the right in the direction of travel and the two rear wheels rotate counter-clockwise, viewed from above, about the bearing shaft and the pedal scooter performs right turn.

The braking of the pedal scooter is effected when the intermittent rotation of the drive pedal 5 by moving the weight from the foot to the foot is terminated, and simultaneously, by pressing the brake handle 33 the braking cable 32 is withdrawn. As a result, the braking device, whose mode of operation is not described herein, by virtue of the frictional force, prevents the rotation of the rear wheels of the pedal scooter.

## Claims

1. A pedal scooter comprising a support frame (1) mounted on a front bridge (3) and a rear bridge (4), a chain drive system connected to a drive pedal (5) extended longitudinally and hinged to the support frame, and a handlebar (2) mounted on a vertical arm at the front end of the support frame, **characterized in that**
- the support frame (1) is hinged to the front bridge (3) via front carriers (8) mounted laterally and symmetrically on both sides of the support frame (1) at an angle of 25 °-35 ° to its longitudinal horizontal axis, and
- in the rear the support frame (1) is hinged via a bearing shaft to the rear bridge (4), which is composed of a rear axle with rear wheels camped to it, the rear axle being mounted via a holder on the bearing shaft camped in a rear bearing box located at the rear of the support frame (1) at an angle of 25-35 ° with respect to its longitudinal axis,
- the front bridge (3) is composed of two bearing boxes (11) hinged to the front carriers (8) and connected to one another by means of a rack (16), whereby in the bearing boxes (11) are camped the front shafts (13) of two front wheels (12), each of the front shafts (13) being connected by means of a cardan coupling (14) to a drive shaft (15) camped on the support frame (1), on which support frame (1), symmetrically to its longitudinal axis are mounted a first one-way clutch (17) and a second one-way clutch (18), respectively connected to a first drive chain wheel (19) and a second drive chain wheel (20),
- whereby the chain drive system is composed of a first drive chain (21) and a second drive chain (22), wherein the first drive chain (21) is mounted on a first parasitic chain wheel (24) and on the first drive chain wheel (19) and is hinged to a first movable axle (26) mounted to the front of the drive pedal (5), and
- the second drive chain (22) is mounted on a second parasitic chain wheel (25) and on the second drive chain wheel (20) and is hinged to a second movable axle (27) mounted to the front of the drive pedal (5),
- whereby the two parasitic chain wheels (24, 25) are camped to a parasitic axis (23) mounted in the upper part of the vertical arm of the support frame (1) parallel to the drive shaft (15), and
- a braking device, mounted to the holder of the rear axle, is connected by means of a braking cable (32) with a brake handle (33) mounted on the handlebar (2).

## Patentansprüche

1. **Fahrradroller,** inklusive Tragrahmen (1), platziert auf einer Vorder- (3) und Hinterachse (4), Kettenantriebssystem, mit dem Antriebspedal (5) verbunden, in Längsrichtung angeordnet und am Tragrahmen angelenkt, und Lenkrad (2), vertikal am vorderen Ende des Tragrahmens montiert
**mit folgeden Eigenschaften:**
- der Tragrahmen (1) ist durch Scharniere auf der Vorderachse (3) festgestellt, mittels Frontträgern (8), montiert seitlich und symmetrisch an beiden Seiten des Tragrahmens (1) unter einem Winkel von 25°-35° in Bezug auf die horizontale Längsachse, und
- im hinteren Abschnitt ist der Tragrahmen (1) mit Scharnieren festgestellt, mittels einer Stützwelle an der Hinterachse (4), bestehend aus einer Hinterachse mit hinteren Laufrädern, montiert durch eine Halterung an der Tragwelle (9), in einem hinteren Lagerkasten untergebracht, im hinteren Abschnitt des Trarrahmens (1), unter einem Winkel von 25-35° in Bezug auf die Längstachse,
- indem die Vorderachse (3) aus zwei Lagerkästen (11) besteht , an den Frontträgern angelenkt (8) und mittels einer Schiene (16) aneinander angelenkt, indem in den Lagerkästen (11) die Vorderwellen (13) der beiden vorderen Laufräder (12) gelagert sind, indem jede der Vorderwellen (13) durch ein Kardangelenk (14) mit der im Tragrahmen (1) gelagerten, Antriebswelle (15) verbunden ist, auf welcher, symmetrisch gegenüber der Längstachse des Tragrahmens (1), der erste (17) und zweite (18) Einweganschluss montiert sind, entsprechend verbunden mit dem ersten (19) und zweiten (20) Antriebs-Kettenrad,
- indem das Antriebs-Kettensystem aus einer ersten (21) und zweiten Antriebskette (22) besteht, die erste Antriebskette (21) auf das erste Parasiten-Kettenrad (24) und auf das erste Antriebs-Kettenrad (19) liegt, und an der ersten beweglichen Achse (26) angelenkt, montiert am vorderen Teil des Antriebspedals (5),
- und das zweite Antriebs-Kettenrad (22) ist auf ein zweites Parasiten-Kettenrad (25) und auf ein zweites Antriebs-Kettenrad (20), und an einer zweiten beweglichen Achse (27) angelenkt, montiert am vorderen Teil des Antriebspedals (5),
- indem beide Parasiten-Kettenräder (24, 25) an einer Parasiten-Achse (23) gelagert sind, montiert im oberen Abschnitt des senkrechten Armes des Tragrahmens (1), parallel zur Antriebswelle (15),
- indem am Hinterachshalter (28) ein Bremsapparat (31) montiert ist, verbunden durch ein Bremskabel (32) mit einem Bremshebel (33), angebracht am Lenker (2).

## Revendications

1. **Vélo-scooter** comprenant un cadre portant (1) fixé sur un pont avant (3) et un pont arrière (4), un système d'entraînement à chaîne relié à une pédale d'entraînement (5) située longitudinalement sur et articulée sur le cadre portant, et un guidon (2) monté verticalement à l'extrémité avant du cadre portant
**caractérisé en que**
- le cadre portant (1) est articulé sur le pont avant (3) au moyen de supports avant (8) montés latéralement et symétriquement des deux côtés du cadre portant (1) sous un angle de 25° -35° par rapport à son axe horizontal longitudinal, et
- dans sa partie arrière, le cadre portant (1) est articulé au moyen d'un arbre portant sur le pont arrière (4), lequel est composé d'un axe arrière auquel des galets arrière sont engagés, monté au moyen d'un support sur un arbre portant (9) engagé dans un boîtier à paliers arrière disposée dans la partie arrière du cadre portant (1), sous un angle de 25° - 35° par rapport à son axe longitudinal,
- le pont avant (3) étant constitué de deux boîtiers à paliers (11) articulés aux supports avant (8) et articulés l'un à l'autre au moyen d'une tige (16), les arbres avant (13) des deux roues motrices avant (12) étant engagés dans les boîtiers à paliers (11), chacun des arbres avant (13) étant relié au moyen d'une articulation à cardan (14) à l'arbre d'entraînement (15) engagé fans le cadre portant (1), sur lequel, symétriquement par rapport à l'axe longitudinal du cadre portant (1), un premier (17) et un second (18) accouplements unidirectionnels sont montés, reliés respectivement au premier (19) et au second (20) pignons d'entraînement,
- le système d'entraînement à chaîne étant composé d'une première (21) et d'une seconde chaîne d'entraînement (22), la première chaîne d'entraînement (21) étant fixée sur un premier pignon intermédiaire (24) et sur le premier pignon d'entraînement (19), et étant articulé sur le premier axe mobile (26), monté sur la partie avant de la pédale d'entraînement (5),
- et la seconde chaîne d'entraînement (22) étant fixée sur un second pignon intermédiaire (25) et sur un second pignon d'entraînement (20), et étant articulée sur le second axe mobile (27) monté à la partie avant de la pédale d'entraînement (5)),
- les deux pignons intermédiaires (24, 25) étant engagés dans un axe parasite (23) monté dans la partie supérieure du bras vertical du cadre portant (1), parallèlement à l'arbre d'entraînement (15),
- un appareil de freinage (31) étant relié au support de l'axe arrière (28), relié au moyen d'un câble de frein (32) à une poignée de frein (33) montée sur le guidon (2).
